# EUROPEAN PATENT SPECIFICATION

(11) **EP 1 745 860 B1**
(45) Date of publication and mention of the grant of the patent: **15.01.2014**
(21) Application number: 06253817.8
(22) Date of filing: 20.07.2006
(51) Int. Cl.: B07B 1/00, B07B 13/16, B65G 41/00

(54) **Hopper slide support structure**
Trag- und Schiebestruktur für Trichter
Structure support à glissement pour trémie.

(30) Priority: 20.07.2005 GB 0514839
(43) Date of publication of application: 24.01.2007
(73) Proprietor: Extec Screens and Crushers Limited, Swadlincote, Derbyshire DE11 9DU (GB)
(72) Inventor: Hirst, Neil, c/o Extec Screens & Crushers Ltd., Derbyshire, DE11 9DU (GB); Grew, Keith, c/o Extec Screens & Crushers Ltd., Derbyshire, DE11 9DU (GB)
(74) Representative: Neilson, Martin Mark

(56) References cited:
- DE-C1- 3 800 816
- FR-A- 2 447 292

## Description

This invention relates to a support structure for slidably mounting a hopper for movement between a raised operative position and a lower inoperative transport position on a screening apparatus for screening bulk material.

Screening apparatus are used to screen bulk material into different ranges of screened sizes, and in a quarry environment can separate crushed rock and stone into ballast, aggregate, and sand. In the processing of bulk waste material, or site clearance material, a screening plant can separate out undesired scrap material from desired material, such as sieved soil.

Screening plants can be permanent, or semi-permanent, for long term use on a single site, in which case the plant will usually be transported to site in separate portions, and then assembled on site.

However, many screening plants are constructed so as to be either: a) readily transportable to move from one site to another; or b) are self propelled, to be easily manoeuvrable on site, and to facilitate loading and unloading relative to a load platform of a transport vehicle when it is required to be moved a substantial distance from one site to another.

A typical screening apparatus has a loading hopper which receives a supply of bulk material (and which may optionally be provided with a preliminary coarse screening function e.g. a bar grizzly screen, to separate excessively large material, such as tree roots or large pieces of rubble), and a "screen box" which receives the material from the hopper and separates the material into different size ranges, depending upon the number and arrangement of screen decks provided in the screen box. The supply from the hopper to the screen box usually relies upon gravity discharge, and the decks of a typical screen box slope downwardly from the receiving end to a lower discharge end from which over-sized material can be discharged. Screened material falls downwardly through the decks, and discharge conveyors are arranged to receive and to discharge different size ranges of screened materials to stockpiles.

Given the part that gravity has to play, in the handling of bulk material by a screening plant, necessary the overall height of the apparatus (when in a operating position) has to be substantial, and with the result that the highest parts of the apparatus (and usually including the input hopper) are too high for the apparatus to be transported along the public highway, without risk of impact with overlying bridges.

It is therefore usually to provide some means of adjustment of self-propelled screening machines, so that the higher parts e.g. the input hopper of the machine (in the operative position) can be adjusted to a lower transport position.

DE 3800816 discloses a compost screening machine in which selected components including a feed funnel and a screen drum may be rearranged so as to provide a more compact screening machine for transport purposes. In particular, the feed funnel and screen drum may be aligned parallel with the vehicle axis to provide more convenient road transport positions.

FR 2447292 similarly discloses screening apparatus in accordance with the preamble of claim 1 in which the working components are moveable to provide a more compact road transport profile.

The present invention has been developed with a view to providing an improved support structure for slidably mounting an input hopper for movement between a raised operative position and a lower inoperative and transport position on a screening apparatus for screening bulk material.

According to the invention there is provided a support structure for slidably mounting an input hopper for movement between a raised operative position and a lower inoperative transport position on a screening apparatus for screening bulk material according to claim 1, in which the structure comprises:
an input hopper having a base frame;
a ramp on which the base frame is slidably mounted for movement of the hopper between the raised operative position and the inoperative transport position, said ramp being adapted to be mounted on a chassis of a self propelled plant at its upper end;
slide blocks engageable with the base frame to support the slidable movement of the input hopper along the ramp; and
mounting brackets on which the slide blocks are mountedon the chassis;
characterised in that:
   the slide blocks are pivotally mounted on the chassis via the mounting brackets.

The provision of the slide blocks permits linear movement of the input hopper between its operative and inoperative positions, and with direct support and low friction contact between the slide blocks and the engaging surfaces of the base frame of the hopper. There is therefore very little risk of any operative inadvertently getting a part of the body e.g. a hand, trapped between the inter-engaging surfaces, as there is no "pinch point" where a body contact could be made, with otherwise consequent risk of the body part being drawn into the space between the inter-engaging surfaces. There is therefore also no obligation to provide any safety guard in this region of the apparatus.

The slide blocks can take any suitable form, to provide durable and slidable support for transmitting the weight of the hopper to the ramp, and preferably the blocks are made of hard plastics material. To facilitate the slidable movement, it is preferred that the blocks are self-lubricating e.g. by impregnating the wear surfaces of the blocks, preferably made of nylon, with graphite.

The ramp may be formed by a pair of laterally spaced apart rails, and the engaging parts of the base frame may comprise frame components which at least partly surround the rails. By way of example, the rails may be of box section, and the frame components also may be of box-section, but of larger cross-sectional size so as to enclose the box-section rails.

To facilitate the slidable adjustment of the input hopper, suitable drive means may be provided to apply relative linear displacement between the base frame and the ramp. Conveniently, the drive means comprises a piston-cylinder arrangement which may be housed within each of the rails of the ramp.

The support structure of the invention is particularly suitable for being mounted on the chassis of a self-propelled screening plant, in which the upper end of the ramp is mounted on an upstanding support on the chassis so that the hopper (when raised to the operative position) can readily supply bulk material to be screened to a downwardly sloping screen box mounted on the chassis, on the other side of the upstanding support from the hopper.

To improve gravity feed of bulk material from the hopper and through the various screening/conveyor sections of the screening plant, it is preferred that the upstanding support is upwardly adjustable so that the upper end of the ramp can be raised relative to the chassis, thereby increasing the height of the discharge end of the input hopper when it takes up its raised operative position.

The slide blocks are preferably arranged at or near the lower end of the hopper (when the latter is in its operative position), and to accommodate the upward and downward adjustment of the upper end of the ramp, the blocks are pivotally mounted in position.

The slide blocks may be pivotally mounted on the chassis of the screening plant, at or near the rear end thereof (with respect to the direction of forward movement of the plant), and conveniently may fit within, and support a respective guide track fixed to the underside of the base frame of the hopper.

A preferred embodiment of support structure according to the invention (for slidably mounting a hopper for movement between a raised operative position and a lower transport position on a screening apparatus for screening bulk material), will now be described in detail, by way of example only, with reference to the accompanying drawings, in which:
Figure 1 is a side view of a rear end of a self propelled screening plant, provided with a support structure for slidably mounting an input hopper on the chassis of the plant for movement between a raised operative position, as shown in Figure 1, and a lower inoperative and transport position (not shown);
Figure 2 is a view, similar to Figure 1, but showing the input hopper adjusted to the lower inoperative and transport position;
Figure 3a and 3b are side and plan views respectively of a pivotal mounting bracket for supporting a slide block (not shown) which supports and guides the sliding movement of a base frame of the input hopper; and
Figures 4a and 4b are side and plan views respectively of a slide block to be mounted on the bracket shown in Figure 3.

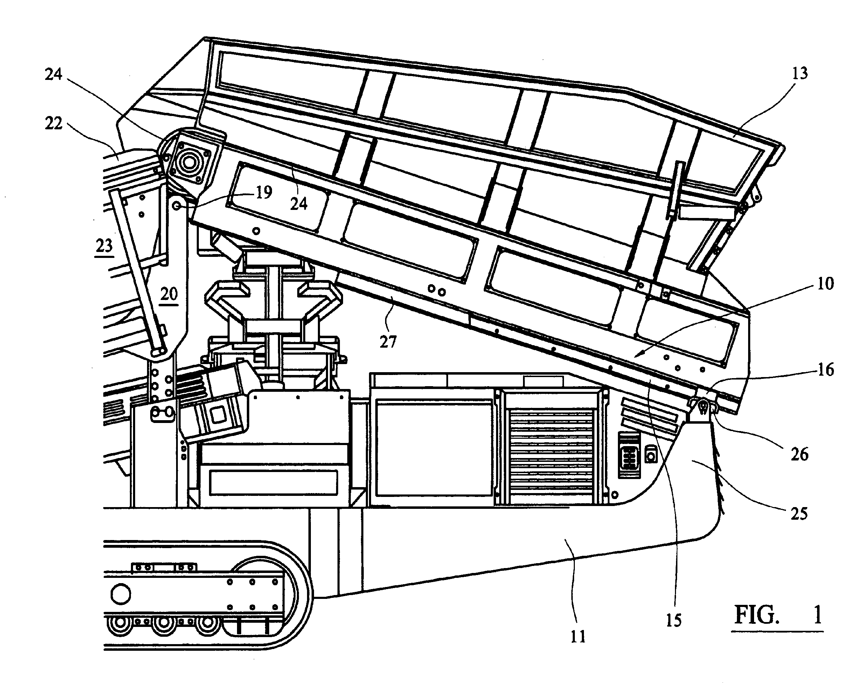

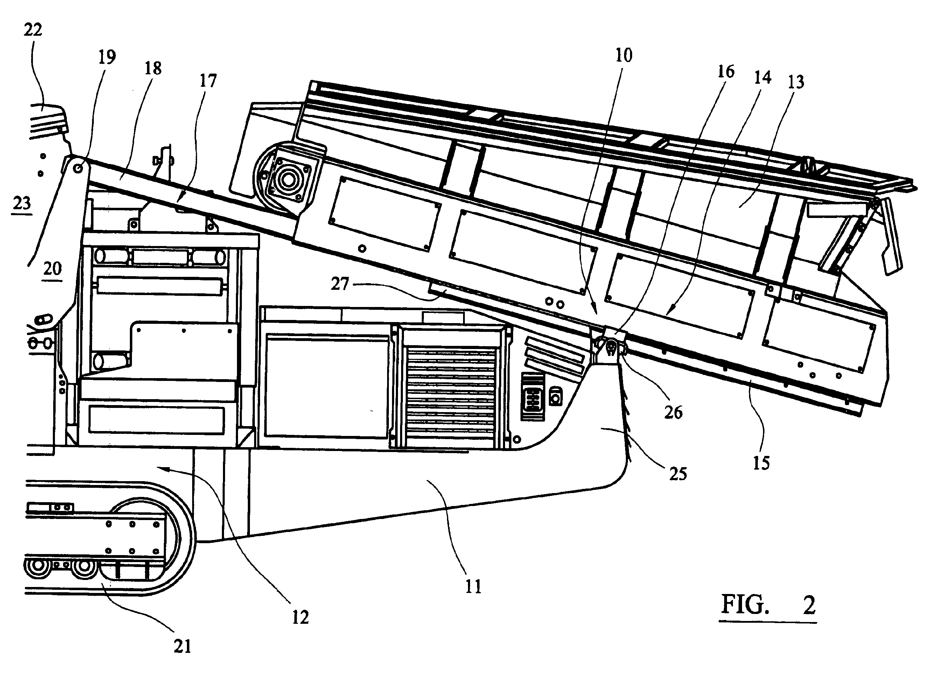

Referring now to the drawings, a support structure according to the invention is designated generally by reference 10, and is mounted in position on a chassis 11 of a self propelled screening plant 12, in order to slidably mount an input hopper 13 for movement between a raised operative position shown in Figure 1, and a lower inoperative transport position shown in Figure 2. The support structure 10 is shown mounted on a chassis of a self propelled screening plant 12, by way of example only, and may be provided in other types of screening plant, having an input hopper which requires to be adjustable between a raised operative position and a lower transport position.

The input hopper 13 has a base frame 14 which includes, on its underside, a guide track 15, 27. The guide track 15 slidably receives and is supported by a respective slide block 16, which guides linear sliding movement of the hopper 13 between the lower transport position shown in Figure 2 and the upper operative position shown in Figure 1.

The support structure also includes a ramp 17 on which the base frame 14 is slidably mounted, and which is formed by box section beams 18 pivotally mounted at their upper ends on pivot 19 carried by an upstanding support 20 provided on the chassis 11. The base frame 14 also includes box section frame components, slightly larger in cross section than the beams 18, to enclose the beams 18 over which they are linearly slidable during adjustment of the hopper 13.

To drive the hopper between its different positions, a piston-cylinder arrangement (not shown) is provided internally of each of the beams 18 of the ramp 17.

The slide blocks 16 take any suitable form, to provide durable and slidable support for transmitting the weight of the hopper 13 to the chassis 11 via the slide blocks. The blocks are made of hard plastics material, preferably nylon. To facilitate the slidable movement, the blocks 16 are self-lubricating, preferably by impregnating the wear surfaces of the nylon blocks with graphite.

The linear sliding movement of the hopper 13 from the transport position of Figure 2 to the operative position of Figure 1 is usually followed by, or accompanied by, upward adjustment of the height of the pivots 19, so as to raise the overall height of the discharge end of the hopper 13. Adjustment holes are shown in the support 20, to determine any required height adjustments, which can be achieved by any suitable power operated means, not shown.

Figures 1 and 2 show only the rear end of the self propelled screening plant 12, supported by endless tracks 21, and the upright support 20 is located approximately mid-length of the chassis 11. There is shown only in brief outline, forwardly of the support 20, the upper receiving end 22 of a multi-deck screen box 23. The input hopper 13 has a supply elevator 24 which lifts bulk material supplied to the lower input end of the hopper 13 towards the upper discharge end of the hopper, where the material can fall under gravity onto an upper receiving end of the screen box 23.

To permit the upward and downward adjustment of the upper end of the hopper 13, by vertical adjustment of support 20, the slide blocks 16 are pivotally mounted on a rear end 25 of the chassis 11 via pivoting support brackets 26.

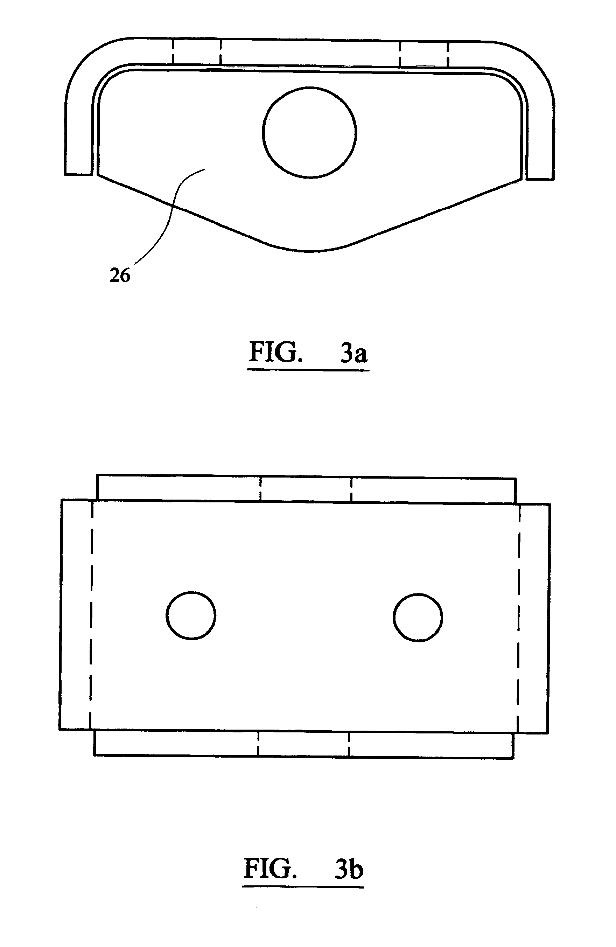

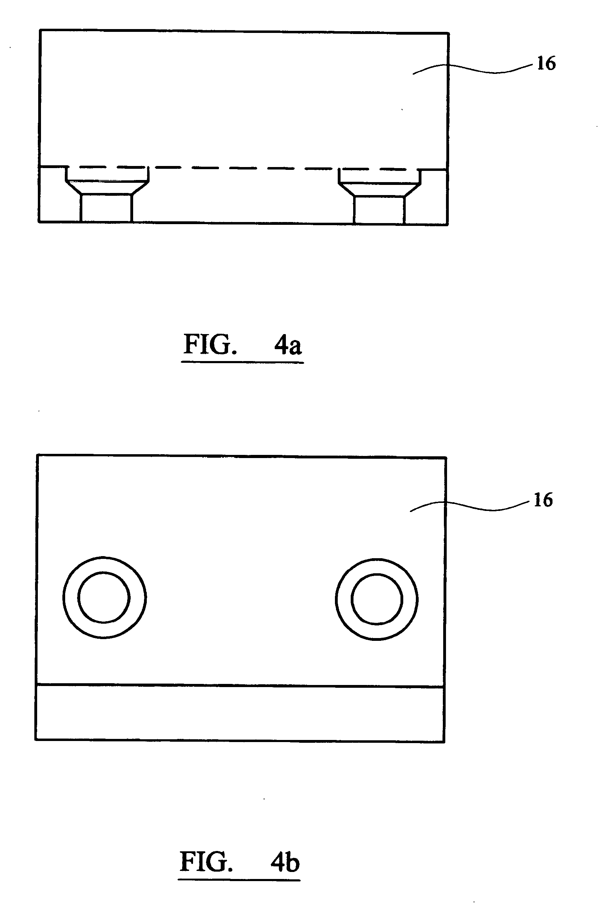

The construction of the slide blocks 16 and support brackets 26 are shown in more detail in Figures 3 and 4.

## Claims

1. A support structure (10) for slidably mounting an input hopper (13) for movement between a raised operative position and a lower inoperative transport position on a screening apparatus (12) for screening bulk material, in which the structure (10) comprises:
an input hopper (13) having a base frame (14, 15);
a ramp (17) on which the base frame (14, 15) is slidably mounted for movement of the hopper (13) between the raised operative position and the inoperative transport position, said ramp (17) being adapted to be mounted (19) on a chassis (11) of a self propelled plant at its upper end;
slide blocks (16) engageable with the base frame (14) to support the slidable movement of the input hopper (13) along the ramp (17); and
mounting brackets (26) on which the slide blocks (16) are mounted on the chassis (11);
**characterised in that**:
the slide blocks (16) are pivotally mounted on the chassis (11) via the mounting brackets (26).

2. A structure according to claim 1, in which the slide blocks (16) are made of plastics material.

3. A structure according to claim 2, in which the slide blocks (16) are made of nylon impregnated with graphite.

4. A structure according to anyone of claims 1 to 3, in which the ramp (17) includes beams (18) over which frame components of the base frame (14) are slidable.

5. A structure according to claim 4, in which the beams (18) are hollow, each incorporating a piston-cylinder device to drive the hopper (13) between its operative and inoperative positions.

6. A structure according to any one of the preceding claims, and mounted on the chassis (11) of the screening apparatus (12).

7. A structure according to claim 6, in which the slide blocks (16) are mounted at an end part (25) of the chassis (11), and an end of the ramp (17) is pivotally coupled to an upstanding support (20) provided on the chassis (11) via pivots (19).

## Patentansprüche

1. Haltestruktur (10) zum verschiebbaren Anbringen eines Eingangsbehälters (13) für eine Bewegung zwischen einer angehobenen Arbeitsposition und einer tieferen Transportruheposition an einer Siebvorrichtung (12) zum Sieben von Schüttgut, wobei die Struktur (10) umfasst:
einen Eingangsbehälter (13) mit einem Basisrahmen (14, 15);
eine Rampe (17), auf welcher der Basisrahmen (14, 15) für eine Bewegung des Behälters (13) zwischen der angehobenen Arbeitsposition und der Transportruheposition verschiebbar angebracht ist, wobei die Rampe (17) ausgestaltet ist, an einem Fahrgestell (11) von einer selbstangetriebenen Anlage an ihrem oberen Ende befestigt zu werden (19);
Gleitblöcke (16), welche mit dem Basisrahmen (14) in Eingriff bringbar sind, um die verschiebbare Bewegung des Eingangsbehälters (13) entlang der Rampe (17) zu unterstützen; und
Befestigungshalterungen (26), auf welchen die Gleitblöcke (16) an dem Fahrgestell (11) befestigt sind;
**dadurch gekennzeichnet, dass**:
die Gleitblöcke (16) über die Befestigungshalterungen (26) drehbar an dem Fahrgestell (11) befestigt sind.

2. Struktur nach Anspruch 1, wobei die Gleitblöcke (16) aus einem Kunststoffmaterial gefertigt sind.

3. Struktur nach Anspruch 2, wobei die Gleitblöcke (16) aus einem mit Graphit imprägnierten Nylon gefertigt sind.

4. Struktur nach einem der Ansprüche 1 bis 3, wobei die Rampe (17) Träger (18) aufweist, über welchen Rahmenkomponenten des Basisrahmens (14) verschiebbar sind.

5. Struktur nach Anspruch 4, wobei die Träger (18) hohl sind, wobei jeder eine Kolben-Zylinder-Vorrichtung enthält, um den Behälter (13) zwischen seiner Arbeits- und Ruheposition zu führen.

6. Struktur nach einem der vorhergehenden Ansprüche und angebracht an dem Fahrgestell (11) der Siebvorrichtung (12).

7. Struktur nach Anspruch 6, wobei die Gleitblöcke (16) an einem Endteil (25) des Fahrgestells (11) angebracht sind, und wobei ein Ende der Rampe (17) über Drehpunkte (19) mit einer an dem Fahrgestell (11) vorgesehenen aufrechten Stütze (20) drehbar gekoppelt ist.

## Revendications

1. Structure de support (10) pour monter de façon coulissante une trémie d'entrée (13) pour le mouvement entre une position fonctionnelle élevée et une position de transport non fonctionnelle plus basse sur un appareil de criblage (12) pour cribler un matériau en vrac, dans laquelle la structure (10) comprend :
une trémie d'entrée (13) comportant un cadre de base (14, 15) ;
une rampe (17) sur laquelle le cadre de base (14, 15) est monté de façon coulissante pour le mouvement de la trémie (13) entre la position fonctionnelle élevée et la position de transport non fonctionnelle, ladite rampe (17) étant adaptée pour être montée (19) sur un châssis (11) d'un équipement automoteur à son extrémité supérieure ;
des blocs de coulissement (16) pouvant entrer en prise avec le cadre de base (14) pour supporter le mouvement coulissant de la trémie d'entrée (13) le long de la rampe (17) ; et
des appuis de montage (26) sur lesquels les blocs de coulissement (16) sont montés sur le châssis (11) ;
caractérisé en ce qui :
les blocs de coulissement (16) sont montés de façon pivotante sur le châssis (11) par l'intermédiaire des appuis de montage (26).

2. Structure selon la revendication 1, dans laquelle les blocs de coulissement (16) sont faits de matière plastique.

3. Structure selon la revendication 2, dans laquelle les blocs de coulissement (16) sont faits de nylon imprégné avec du graphite.

4. Structure selon une quelconque des revendications 1 à 3, dans laquelle la rampe (17) comprend des poutres (18) par-dessus lesquelles des composants de cadre du cadre de base (14) peuvent coulisser.

5. Structure selon la revendication 4, dans laquelle les poutres (18) sont creuses, chacune incorporant un dispositif piston-cylindre pour entraîner la trémie (13) entre ses positions fonctionnelle et non fonctionnelle.

6. Structure selon une quelconque des revendications précédentes, et montée sur le châssis (11) de l'appareil de criblage (12).

7. Structure selon la revendication 6, dans laquelle les blocs de coulissement (16) sont montés sur une partie d'extrémité (25) du châssis (11), et une extrémité de la rampe (17) est accouplée de façon pivotante avec un support (20) prévu sur le châssis (11) par l'intermédiaire de pivots (19).
